# EUROPEAN PATENT SPECIFICATION

(11) **EP 3 277 407 B1**
(45) Date of publication and mention of the grant of the patent: **16.06.2021**
(21) Application number: 16716640.4
(22) Date of filing: 22.03.2016
(51) Int. Cl.: B01D 53/62, B01D 53/78

(54) **PROCESS FOR THE ABSORPTION OF CARBON DIOXIDE**
VERFAHREN ZUR ABSORPTION VON KOHLENDIOXID
PROCÉDÉ D'ABSORPTION DE DIOXIDE DE CARBONE

(30) Priority: 02.04.2015 GB 201505737
(43) Date of publication of application: 07.02.2018
(73) Proprietor: Fluid Technologies (Environmental) Limited, Kingston upon Thames Surrey KT2 6QF (GB)
(72) Inventor: DAVIS, Howard Paul, Richmond Surrey TW10 7AA (GB); MISSIONS, David William, Ashford Kent TN26 1HT (GB)
(74) Representative: Jones, Graham Henry
(86) International application number: PCT/GB2016/000057
(87) International publication number: WO 2016/156771

(56) References cited:
- WO-A1-2011/014955
- WO-A1-2011/014957
- US-A1- 2010 303 694
- US-A1- 2013 005 015
- US-A1- 2013 109 074
- US-A1- 2014 217 017

## Description

The present invention provides a method for capturing Carbon Dioxide (CO₂) from flue gas & waste gas streams in to liquid at a high efficiency (or at a required efficiency) without the need for liquid or aqueous reagents such as Amines and Carbonates.

Currently in order to fulfil the requirement for higher efficiency carbon capture, thus enabling useful transfer to products or storage in a more manageable form, chemical reactions which enhance liquid absorption of CO₂ by reacting with it within the liquid interface are widely employed.

Once captured the CO₂ may have to be released into a more concentrated stream such that it becomes necessary to reverse the chemical reaction which binds it (e.g. K₂CO_{3(aq)} + CO_{2(aq)} + H₂O₍₁₎ = 2KHCO_{3(aq)}). This is another costly step, which is facilitated by changes in pressure, temperature or chemical equilibrium or by applying a second reagent to 'unlock' the CO₂ and release it in a more usable state.

WO2011/014957A1 and WO011/014955A1 describe absorption concepts for CO₂ in packed bed reactors.

Typically CO₂ recovered in carbon capture plants can be used for Enhanced Oil Recovery or for Growth Enhancement of horticultural crops, fruits & flowers in glasshouses.

By combining the unique properties of counter-current fluidised bed gas scrubbers, which employ fluidisable elements, being hollow or low density solid elements, usually manufactured in plastic materials, with the use of non-reacting salt or saline solutions, a more advantageous result is achieved.

The result is a surprisingly efficient method for capturing carbon and quickly releasing it (from a fluidised bed or other desorber or stripper), which overcomes the need for expensive consumable reagents or application of heat, pressure and additives for CO₂ release and reagent regeneration purposes.

The unique properties of fluid bed gas scrubbers that allow the combinatory effects to function are;
a) Impossible to cause 'Flooding';
b) The use of high liquid to gas (L/G) ratios without excessive gas pressure loss;
c) Generation of high interfacial areas particularly with eccentric shapes; and,
d) Salting out (precipitation of salts above the solubility limit) will not block the fluidised bed, which can handle high percentage slurries, or hinder the process

By applying these advantages in combination with the use of salt solutions in water it becomes possible to raise capture efficiencies (CO₂ removal percentage) to well above 50%, which is otherwise not achievable except by employing costly and inherently complicated reacting systems.

Typically salt or saline solutions can include any dissolvable salt up to, and even beyond, its solubility limit such that the solution is maintained at saturation. The important thing is to use an existing saline solution such as brackish or sea water or to increase the salt concentration of a town or process water such that the Ionic Strength of the solution has at least a value of 0.2 mol/litre.

In addition to the requirement for elevated salt concentration, other simultaneous conditions needed to create the required high removal efficiencies (typically greater than 10% absorption is needed for most applications using CO₂) are to have CO_{2(g)} partial pressures in gas above 1% v/v and L/G ratios, litres/m3, in excess of 20.

At L/G ratios at this level packed towers and sieve plate or tray columns would flood and spray towers would give insufficient interphase surface between the ascending gas and the descending liquid within the scrubber body.

Soluble salts that can be used to boost the Ionic Strength of the resultant saline solution include Chlorides, Bromides, Iodides, Chlorates, Sulphates, Sulphides,

Sulfites, Bicarbonates & Phosphates and even Hydroxides & Carbonates which react with CO_{2(aq)}. However, when using rapid desorption (stripping), as in the arrangement

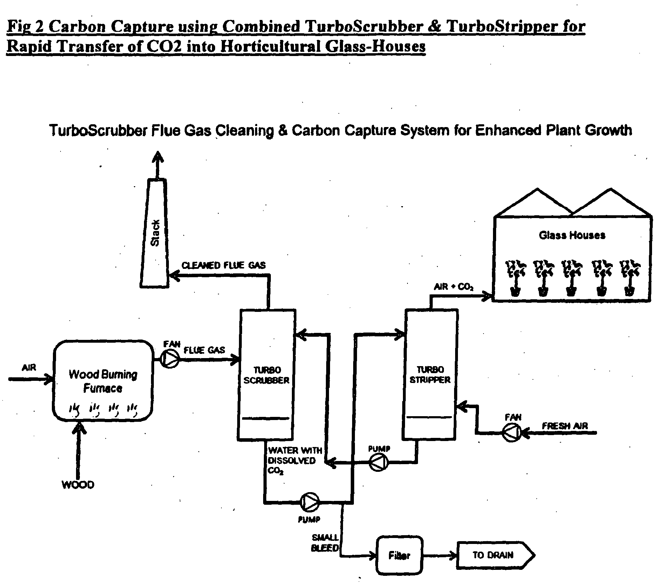

Figure 2, following absorption the CO_{2(aq)}, reactions with these latter two compound groups will be too slow to take effect before the Carbon Dioxide is removed, as required, from the process such that the physical properties of the salts, in helping to effect fast capture of the CO_{2(g)}, are not intererfered with by the reactive properties, which would otherwise convert the useful CO₂ to Bicarbonates and Carbonates A few examples of appropriate salts are CaCl₂, NaCl, KCl, K₂CO₃, KHCO₃, Na₂CO₃, NaHCO₃, CaCO₃, Ca(HCO₃)₂.

Thus, the present invention provides an improved process for carbon capture in accordance with the claims appended hereto.

There now follows a detailed description of the invention, which is to be read with reference to the accompanying drawings in which:
Figure 1 illustrates a graph of carbon dioxide capture rate and fluid bed pressure drop against L/G;
Figure 2 is illustrative of a flue gas cleaning plant; and,
Figure 3 is illustrative of a carbon dioxide capture and algae tank for photosynthesis.

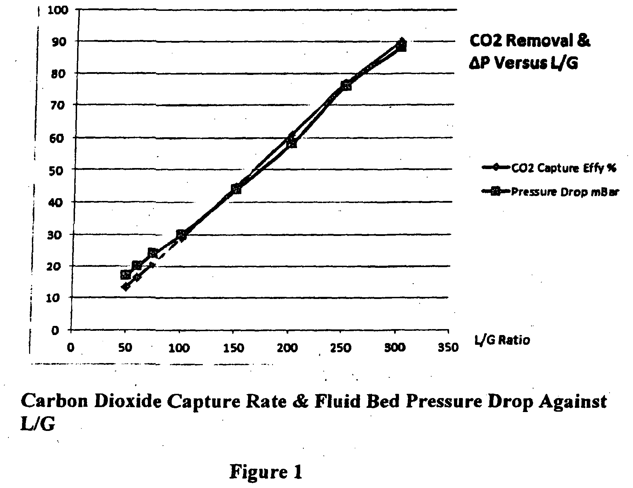

Figure 1 shows the relationship between both CO2 removal efficiency & pressure loss through the fluid bed versus L/G ratio for a bed of selected hollow, generally acorn shaped but distended elements made in polypropylene known as TurboPak^{RTM} in a test tower of 200mm diameter and with a superficial gas velocity of 0.9m/s.

The CO₂ was captured in to a semi saturated aqueous solution of Calcium Chloride of about 50% of its pure CaCl_{2(aq)} solubility limit in water at 12°C, (i.e. at about 31.5g of CaCl_{2(c)} per 100g of water or 2.84mol/litre) being the average temperature of the tested saline solution through the scrubber tower, the saline solution having an Ionic Strength of about 8.5mol/litre.

Other fluidised bed elements are able to generate higher interfacial areas and, hence, greater capture efficiencies and lower pressure drops.

One proposed application of the process is shown in Figure 2, whereby the CO₂ is captured from a dirty flue gas in a fluid bed scrubber (TurboScrubber^{RTM}) then cycled rapidly to a fluid bed stripper (TurboStripper^{RTM}) where it is desorbed in to a clean air stream for introduction to a horticultural glass-house to enhance fruit, vegetable or other crop growth.

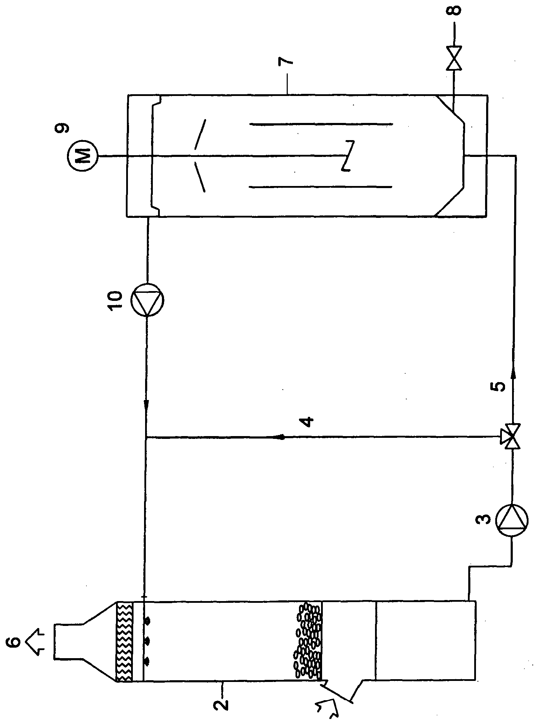

Another proposed application of the novel process provided by the present invention is illustrated in Figure 3, in which process, either CO₂ enriched salt water is circulated through a tank 7 containing Algae to feed the Algae, to allow fast photosynthesis to occur in, for example, the production of bio-fuels, or the Algae suspension, if sufficiently robust, can be pumped around the Turboscrubber^{RTM} 2 and the Algae tank 7 to keep it in constant contact with the CO₂ enriched aqueous solution.

The Turboscrubber^{RTM} is provided with:
a) an inlet 1 for the introduction of flue gas;
b) an outlet 6 for gas of reduced CO₂ content; and,
c) a outlet line 5 including a pump 3 for for feeding the treated flue gas to the Algae tank 7.

The Algae tank 7 comprises an optional stirrer 9, a bleed valve 8 and on outlet line with a return pump 10 in a line 10a for recirculating treated flue gas to the Turboscrubber^{RTM}2.

An optional Algae recycling line 4 is provided between the line 5 and the recirculating line 10a, see Figure 3.

Modifications may be made to the above described development within the scope of the claims appended hereto.

## Claims

1. A process for absorption of carbon dioxide gas in a liquid, which process comprises:
(i) providing a fluidised bed scrubber having a fluidised bed comprising hollow plastics elements; and
(ii) using the hollow plastics elements in the fluidised bed to cause mixing of counter-current flowing streams of liquid and gas,
and **characterised in that** the process comprises:
(iii) using a combination of liquid to gas ratios of at least 20 litres/m³ and simultaneously using saline solutions with an Ionic Strength of at least 0,2 mol/l,
whereby the carbon dioxide gas is absorptively captured in the liquid such that the carbon dioxide gas does not react with the liquid to produce carbon dioxide products by chemical reaction.

2. A process according to claim 1 in which the hollow plastics elements are of a shape and size which cause a contact and interfacial area between the counter-current gas and liquid streams to be such as to minimize gaseous flow pressure drop and to avoid "flooding".

3. A process according to claim 1 or claim 2 in which the concentration of the carbon dioxide in the gas phase is in excess of 1% by volume.

4. A process according to any one of the preceding claims in which the absorptively captured carbon dioxide is removed from the liquid phase by cycling the liquid to a stripping device which enables desorption of the carbon dioxide to take place within a few minutes of the absorptive capture of the carbon dioxide.

5. A process according to claim 4 in which the stripping device is a fluidised bed.

6. A process according to any one of the preceding claims in which the solvent is water.

## Patentansprüche

1. Verfahren zur Absorption von Kohlendioxidgas in einer Flüssigkeit, wobei das Verfahren Folgendes umfasst:
(i) Bereitstellen eines Wirbelschichtwäschers mit einer Kunststoffhohlelemente umfassenden Wirbelschicht; und
(ii) Einsetzen der Kunststoffhohlelemente in der Wirbelschicht zum Herbeiführen einer Vermischung von entgegenströmenden Strömen aus Flüssigkeit und Gas
und **dadurch gekennzeichnet ist, dass** das Verfahren Folgendes umfasst:
(iii) Einsetzen einer Kombination von Flüssigkeitzu-Gas-Verhältnissen von mindestens 20 Litern/m³ und gleichzeitiges Einsetzen von Salzlösungen mit einer Ionenstärke von mindestens 0,2 mol/l, wodurch das Kohlendioxidgas durch Absorption derart in der Flüssigkeit aufgenommen wird, dass das Kohlendioxidgas nicht durch chemische Reaktion mit der Flüssigkeit unter Bildung von Kohlendioxidprodukten reagiert.

2. Verfahren nach Anspruch 1, bei dem die Kunststoffhohlelemente eine Form und Größe besitzen, durch die eine Kontaktfläche und Grenzfläche zwischen den entgegenströmenden Gas- und Flüssigkeitsströmen herbeigeführt wird, die derart ist, dass ein Gasströmungsdruckverlust minimiert wird und eine "Flutung" vermieden wird.

3. Verfahren nach Anspruch 1 oder Anspruch 2, bei dem die Konzentration des Kohlendioxids in der Gasphase 1 Volumen-% übersteigt.

4. Verfahren nach einem der vorhergehenden Ansprüche, bei dem das durch Absorption aufgenommene Kohlendioxid aus der Flüssigphase entfernt wird, indem die Flüssigkeit zu einer Strippvorrichtung gelenkt wird, die es ermöglicht, dass die Desorption des Kohlendioxids innerhalb weniger Minuten von der Aufnahme des Kohlendioxids durch Absorption erfolgt.

5. Verfahren nach Anspruch 4, bei dem es sich bei der Strippvorrichtung um eine Wirbelschicht handelt.

6. Verfahren nach einem der vorhergehenden Ansprüche, bei dem es sich bei dem Lösungsmittel um Wasser handelt.

## Revendications

1. Procédé pour l'absorption de gaz de dioxyde de carbone dans un liquide, lequel procédé comprend :
(i) la mise à disposition d'un épurateur à lit fluidisé possédant un lit fluidisé comprenant des éléments de plastiques creux ; et
(ii) l'utilisation d'éléments de plastiques creux dans le lit fluidisé pour provoquer le mélange de flux s'écoulant à contre-courant de liquide et de gaz,
et **caractérisé en ce que** le procédé comprend :
(iii) l'utilisation d'une combinaison de rapports de liquide sur gaz d'au moins 20 litres/m³ et simultanément l'utilisation de solutions salines dotées d'une Force Ionique d'au moins 0,2 mole/1,
le gaz de dioxyde de carbone étant capturé par absorption dans le liquide de telle sorte que le gaz de dioxyde de carbone ne réagit pas avec le liquide pour produire des produits de dioxyde de carbone par réaction chimique.

2. Procédé selon la revendication 1 dans lequel les éléments de plastiques creux sont d'une forme et d'une taille qui provoquent un contact et une zone interfaciale tels entre les flux de gaz et de liquide à contre-courant pour minimiser une chute de pression d'écoulement gazeux et éviter une « submersion ».

3. Procédé selon la revendication 1 ou la revendication 2 dans lequel la concentration du dioxyde de carbone dans la phase gazeuse est supérieure à 1 % en volume.

4. Procédé selon l'une quelconque des revendications précédentes dans lequel le dioxyde de carbone capturé par absorption est éliminé de la phase liquide par cyclage du liquide à un dispositif de strippage qui rend possible la désorption du dioxyde de carbone en quelques minutes après la capture par absorption du dioxyde de carbone.

5. Procédé selon la revendication 4 dans lequel le dispositif de strippage est un lit fluidisé.

6. Procédé selon l'une quelconque des revendications précédentes dans lequel le solvant est l'eau.
